# EUROPÄISCHE PATENTSCHRIFT

(11) **EP 0 899 139 B1**
(45) Veröffentlichungstag und Bekanntmachung des Hinweises auf die Patenterteilung: **10.04.2002**
(21) Anmeldenummer: 98113476.0
(22) Anmeldetag: 20.07.1998
(51) Int. Cl.: B60J 7/02

(54) **Versenkbares Festdach**
Retractable hard top
Toit rigide escamotable

(30) Priorität: 26.08.1997 DE 19737057
(43) Veröffentlichungstag der Anmeldung: 03.03.1999
(73) Patentinhaber: Edscha Cabrio-Dachsysteme GmbH, 94491 Hengersberg (DE)
(72) Erfinder: Huber, Helmut, 94557 Niederalteich (DE); Kressel, Karl, 96215 Lichtenfels (DE)
(74) Vertreter: Sparing, Rolf Klaus

(56) Entgegenhaltungen:
- DE-A- 4 025 936
- US-A- 2 841 441

## Beschreibung

Die Erfindung betrifft ein versenkbares Festdach nach dem Oberbegriff des Anspruchs 1.

Bei einer aus der Praxis bekannten Bauart eines Hart-Top-Cabriolets mit einem versenkbaren Festdach ist das Dach der Länge nach und mit den Dachpfosten voran in einen Unterbringungsraum, insbesondere in den Kofferraum einer Stufenheck-Limousine hineinbewegbar, wobei seine beiden hinteren Dachpfosten entlang von seitlichen Schiebeführungen an den Bordwänden der Karosserie absenkbar geführt sind.
DE-A-40 25 936 beschreibt ein versenkbares Fahrzeugdach das samt Dachpfosten und Heckscheibe aus seiner Gebrauchsstellung in einen dahinterliegenden Kofferraum verschiebbar ist. Um eine kompaktere Ablagestellung des Daches zu ermöglichen ist bei diesem Fahrzeugdach vorgesehen, daß die Heckscheibe unter den hinteren Dachbereich, d.h. den rückwärtigen Bereich der Dachschale, einklappbar ist, wozu die Heckscheibe um eine im unteren Endbereich der Dachpfosten verlaufende Achse schwenkbar ist. Dieses bekannte Dach ist jedoch mit Dachpfosten versehen, die nahezu rechtwinkelig zur Dachebene abgewinkelt sind. Beim Versenken dieses Daches der Länge nach in einem in einer Fahrzeugquerrichtung liegenden Unterbringungsraum der Karosserie wäre dadurch im Randbereich der Bordwände für den Quervorschub der ausladenden Dachpfosten sehr viel Platz erforderlich, der bei kompakten Fahrzeugen konstruktiv kaum zur Verfügung steht . Würden sich die Dachpfosten demgegenüber stumpfwinkelig an die Dachplatte anschließen, um einen geringeren Einbauraum zu erzielen, so wäre eine vergleichbare Schwenklagerung der Heckscheibe an den Dachpfosten nicht mehr möglich.

US-A-2,841,441 beschreibt zwei Ausführungsbeispiele von Kraftfahrzeugen mit einem Festdach, eine erste Form für ein zweisitziges Cabriolet-Fahrzeug und eine zweite Ausführungsform für ein viersitziges Cabriolet-Fahrzeug. Bei dem Dach für das zweisitzige Cabriolet-Fahrzeug wird das gesamte Festdach über den Kofferraum beim Öffnen des Daches geschoben, wo das Festdach an entsprechenden, am Fahrzeugäußeren verlaufenden Schienen in Richtung auf das heckseitige Ende hinab verlagert wird. Zwei Festanschläge begrenzen den Verlagerungsweg des Festdachs und dienen zugleich zum Ausrücken des Heckfensters, wenn dieses die Anschläge im Endbereich des Kofferraumdeckels erreicht, dergestalt, daß ein Teil des Heckfensters entgegen der Vorspannung von Federn unter die einstückige Hartschale des Festdachs verschoben wird. Bei dem zweiten Ausführungsbeispiel ist die Dachschale des Festdachs zweiteilig ausgebildet, wobei ein die gesamte Fahrzeugbreite umfassender vorderer Längenabschnitt der Dachschale zunächst über den hinteren Längenabschnitt der Dachschale verschoben wird, während dann das Dach wie bei dem vorherigen Ausführungsbeispiel über den Kofferraumdeckel herab verlagert wird.

Es ist die Aufgabe der Erfindung, ein Festdach nach dem Oberbegriff des Anspruchs 1 anzugeben, welches bei zugleich ausgezeichneter Festigkeit in den Kofferraum des Fahrzeugs versenkbar.

Diese Aufgabe wird bei dem eingangs genannten Festdach erfindungsgemäß mit den kennzeichnenden Merkmalen des Patentanspruchs 1 gelöst.

Insbesondere besteht ein erstes Merkmal der vorliegenden Erfindung in einer besonders steifen unfallsicheren Ausgestaltung des versenkbaren Daches. Zugleich besteht ein zweites Merkmal der vorliegenden Erfindung darin, das starre Dach eines, insbesondere viersitzigen Fahrzeuges, problemlos versenken und in seiner versenkten Stellung in einer solchen Weise innerhalb des Fahrzeugkörpers verstauen zu können, daß sonstige Funktionen des Fahrzeuginnenraumes, insbesondere des Kofferraumes, zumindest weitgehendst erhalten bleiben.

Bei mit den Dachpfosten zu einer Baueinheit bzw. einheitlichen Längsträgern zusammengefaßten seitlichen Dachträgern und einem starr mit diesen verbundenen Längenabschnitt der Dachschale weist das Dach einen im Wesentlichen H-förmigen, in sich sehr stabilen Dachrahmen auf, welcher durch die für eine verschiebliche Abstützung bzw. Führung von Dachschalenteilen oder der Heckscheibe unerläßlichen Führungsschienen zusätzlich verstärkt ist.

Nach einer Weiterbildung der Erfindung ist daher weiter vorgesehen, daß die in an sich bekannter Weise verstellbare Heckscheibe zusätzlich zu einem der beiden Längenabschnitte der Dachschale auch die Heckscheibe in Fahrzeuglängsrichtung verschiebbar an den beiden seitlichen Dachlängsträgern sowie an den an diese anschließenden hinteren Dachpfosten geführt ist, insbesondere derart, daß der vordere Längenabschnitt der Dachschale nach hinten unter einen starren hinteren Längenabschnitt der Dachschale verschiebbar ist und daß zugleich auch die Heckscheibe nach vorne und oben unter den hinteren starren Längenabschnitt der Dachschale verschiebbar ist. Damit wird bei in seiner Versenkstellung befindlichem Dach dessen gesamte Dachschale samt Heckscheibe auf eine der Länge des starren, die beiden Dachlängsträger untereinander verbindenden Längenabschnittes entsprechende Länge verkürzt. Dies ermöglicht bei in der Versenkstellung befindlichem Dach zunächst die Zugänglichkeit des Kofferraumes durch den durch Verschieben der Heckscheibe geschaffenen Freiraum zwischen den beiden Dachpfosten aufrecht zu erhalten. Im Weiteren ermöglicht die Längsverschieblichkeit des vorderen Längenabschnittes eine Reduzierung der innerhalb des Kofferraumes erforderlichen Stauraumlänge, da die beiden vorderen Längenabschnitte der beiden Dachlängsträger ohne Beeinträchtigung des Sitzkomforts auf den Fahrzeugrücksitzen, beiderseits der Rücksitzbank des Fahrgastraumes an den Bordwänden der Fahrzeugkarosserie aufliegen können.

Im Rahmen einer vorteilhaften Gestaltungsform der verschiebbaren Abstützung des Daches an der Fahrzeugkarosserie kann dabei vorgesehen sein, daß die Schiebeführungen, insbesondere für die Dachpfosten des Daches bildenden Trag-und Führungsschiene, in einer der Dachkontur entsprechenden Wölbung zur Fahrzeugheckwand hin abfallend gekrümmt und innerhalb des Kofferraumes im Bereich der Karosseriebordwände befestigt sind.
Eine derartige Ausbildung der verschieblichen Abstützung des Daches an der Fahrzeugkarosserie ermöglicht es in vorteilhafter Weise, daß der die beiden seitlichen Dachlängsträger sowie die beiden an diese anschließenden hinteren Dachpfosten untereinander verbindende starre Teil der Dachschale eine wenigstens der Hutablage des Fahrzeuges entsprechende Länge aufweist und bei in die Öffnungslage verfahrenem Dach den Bereich zwischen vorderem Rand des Kofferraumdeckels und der Rückenlehne der hinteren Fahrzeugsitze überdeckt.

Zugleich resultiert aus einer derartigen Gestaltung einerseits des Daches und andererseits dessen verschieblicher Abstützung an der Fahrzeugkarosserie der Vorteil, daß der verbleibende starre Längenabschnitt der Dachschale bei in der Versenkstellung befindlichem Dach eine Abdeckung der Hutablage bildet und daß andererseits für das Absenken des Daches in den Kofferraum lediglich ein verhältnismäßig kleiner Spaltraum zwischen einem die Hutablage tragenden rückwärtigen Karosseriequerträger und dem Kofferraumdeckel erforderlich ist, so daß der Kofferraumdeckel in herkömmlicher Weise mittels zweier U-förmiger Scharnierarme an einem im Bereich der Hutablage angeordneten Querträger der Fahrzeugkarosserie angelenkt werden kann.

Im Rahmen einer Weiterbildung der Erfindung ist weiter vorgesehen, daß die Karosseriebordwände im Bereich der Rücksitze des Fahrzeuges eine der Breite der Dachlängsträger entsprechende Dicke aufweisen und eine nach oben offene Aufnahmemulde für die vorderen Längenbereiche der Dachlängsträger bilden, wobei vorteilhafterweise schwenk-oder verschiebbare Abdeckungen vorgesehen sein können, welche bei in seiner Schließlage befindlichem Dach die Aufnahmemulden abdekken und gegebenenfalls zugleich Armlehnen bilden.

In einer bevorzugten Einzelausgestaltung der Erfindung ist weiter vorgesehen, der vordere Längenabschnitt der Dachschale ist nach Art eines Schiebedaches zwischen einer angehobenen Schließstellung und einer abgesenkten Verschiebestellung hin und her verstellbar an an den beiden Dachlängsträgern angeordneten Trag-und Führungsschienen abgestützt und zweckmäßigerweise vermittels eines Gewindekabeltriebes antreibbar ist, derart, daß der vordere Längenabschnitt der Dachschale bei in seiner Schließstellung befindlichem Dach auch als Schiebedach genutzt werden kann. In Vervollständigung einer derartigen Nutzbarkeit des vorderen Längenabschnittes der Dachschale kann dann weiter vorgesehen sein, daß der vordere Längenabschnitt der Dachschale aus seiner Schließlage heraus an seinem hinteren Ende nach oben in eine Belüftungsstellung ausstellbar ist.

In weiterer Durchbildung einer derartigen Einzelausgestaltung eines versenkbaren Festdaches ergibt sich eine vorteilhafte Bauweise daraus, daß der hintere starre Längenabschnitt der Dachschale von einer zumindest den verschieblichen vorderen Längenabschnitt der Dachschale, vorzugsweise aber auch die nach vorne und oben verschiebbare Heckscheibe aufnehmenden Kassette untergriffen ist.

Die Heckscheibe ist bei einer derartigen Einzelausgestaltung eines versenkbaren Festdaches ähnlich wie der verschiebliche vordere Längenabschnitt der Dachschale zwischen einer Schließstellung und einer Verschiebestellung hin und her verstellbar sowie in einer gegenüber ihrer Schließstellung abgesenkten Verschiebestellung in die den starren Längenabschnitt der Dachschale untergreifende Kassette einfahrbar. Dem Antrieb der Heckscheibe sind zweckmäßigerweise gleichfalls Gewindekabel zugeordnet.

Die Erfindung ist in der nachfolgenden Beispielsbeschreibung anhand eines in der Zeichnung dargestellten Ausführungsbeispieles im Einzelnen beschrieben.

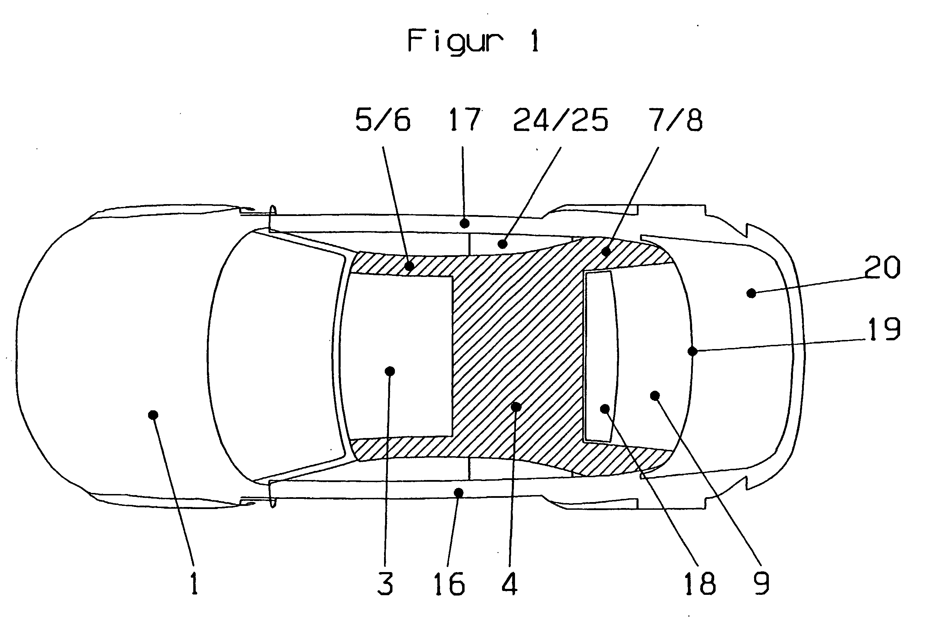

- Fig. 1: zeigt eine Darstellung eines mit einem versenkbaren Festdach ausgestatteten Fahrzeuges bei in der Schließstellung befindlichem Festdach.

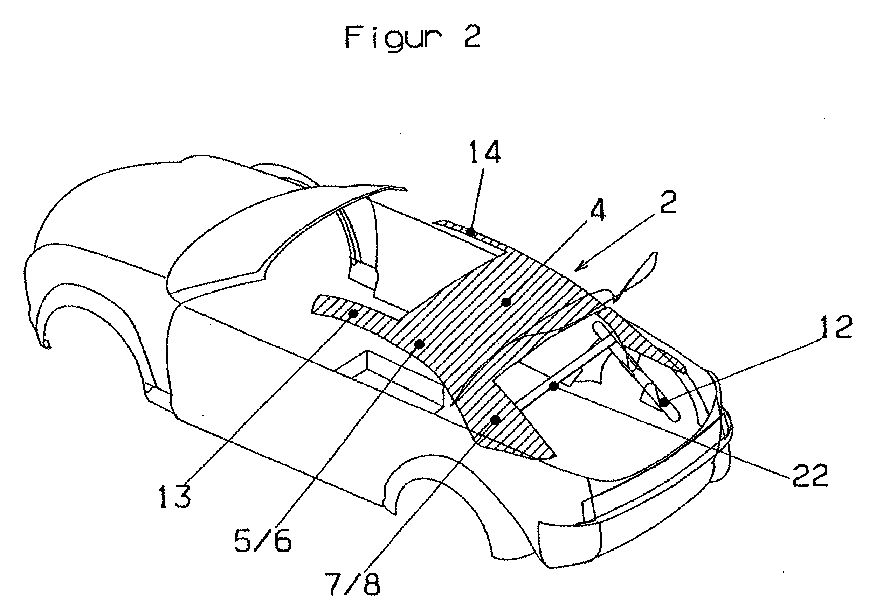

- Fig. 2: zeigt eine Darstellung eines mit einem versenkbaren Festdach ausgestatteten Fahrzeuges bei in einer Teilöffnungsstellung befindlichem Festdach.
- Fig. 3: zeigt eine Darstellung eines mit einem versenkbaren Festdach ausgestatteten Fahrzeuges bei in der Öffnungsstellung befindlichem Festdach.
- Fig. 4: zeigt eine Darstellung der Lage des in der Öffnungsstellung befindlichen Festdaches bei einem Fahrzeug nach Fig. 1 bis 3.

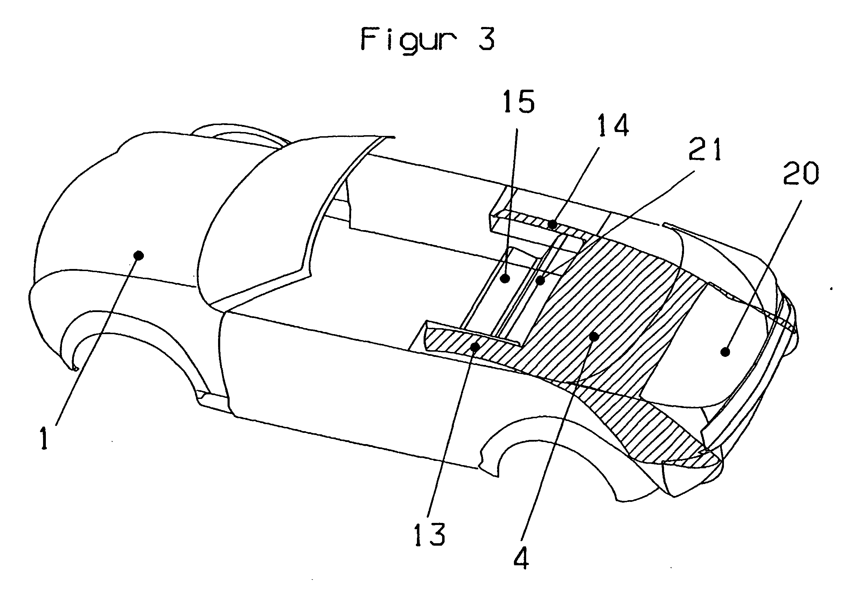

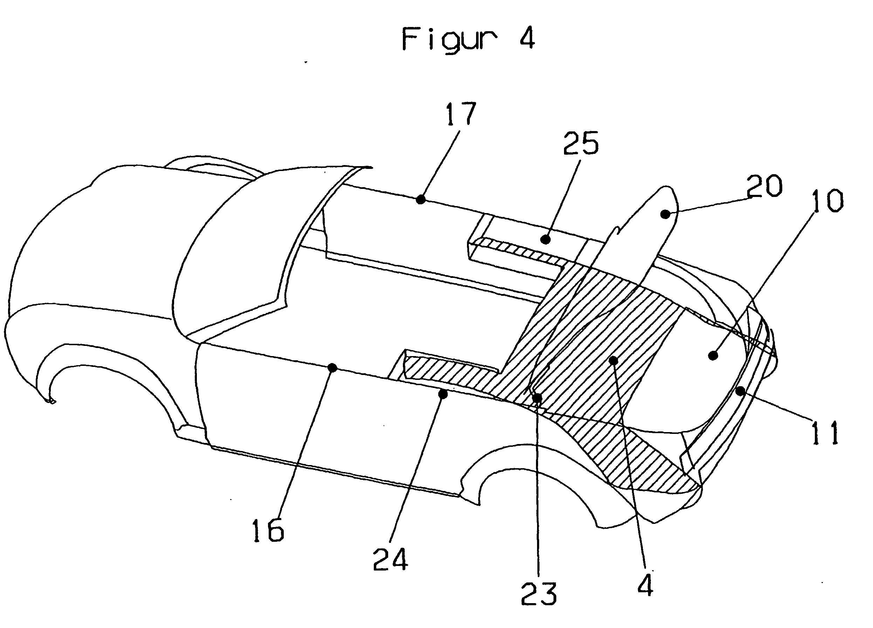

Gemäß der Zeichnung ist ein viersitziges Cabriolet-Fahrzeug 1 mit einem versenkbaren Festdach 2 ausgestattet. Das Festdach 2 besteht im Wesentlichen aus einer in zwei Längenabschnitte 3 und 4 unterteilten Dachschale, zwei seitlichen Dachlängsträgern 5 und 6 und an diese anschließenden hinteren Dachpfosten 7 und 8 sowie einer relativ zur Dachschale verstellbaren Heckscheibe 9 und ist in seiner Gesamtheit mit den Dachpfosten 7 und 8 voran der Länge nach in einem Unterbringungsraum im Heckbereich des Fahrzeuges, insbesondere im Kofferraum 10, hineinbewegbar. Innerhalb des Kofferraumes 10 ist das Festdach 2 dabei an zur Fahrzeugheckwand 11 hin abfallend angeordnete, Schiebeführungen bildenden Trag-und Führungsschienen 12 abgestützt und geführt. Die die Schiebeführungen bildenden Trag-und Führungsschienen 12 sind dabei in einer der Dachkontur entsprechenden Wölbung zur Fahrzeugheckwand 11 hin abfallend gekrümmt. Der vordere 3 der beiden Längenabschnitte 3 und 3 4 der Dachschale ist vermittels in den Zeichnungen im Einzelnen nicht dargestellter Gleitsteine und Führungsschienen an den seitlichen Dachlängsträgern 5 und 6 in Fahrzeuglängsrichtung verschiebbar geführt und abgestützt. derart. daß er zwischen einer vorderen zur Dachebene fluchtenden Schließlage und einer abgesenkten unter den feststehenden hinteren Längenabschnitt 4 der Dachschale verschobenen Öffnungslage verfahrbar ist. Die ihrerseits in Fahrzeuglängsrichtung verschiebbare Heckscheibe 9 ist vermittels in den Zeichnungen im Einzelnen nicht dargestellter Gleitsteine und Führungsschienen an den beiden seitlichen Dachlängsträgern 5 und 6 sowie insbesondere an den an diese anschließenden hinteren Dachpfosten 7 und 8 geführt, derart, daß der vordere Längenabschnitt 3 der Dachschale nach hinten unter einen starren hinteren Längenabschnitt 4 der Dachschale verschiebbar ist und daß zugleich auch die Heckscheibe 9 nach vorne und gleichfalls unter den hinteren starren Längenabschnitt 4 der Dachschale verschiebbar ist. Daraus ergibt sich die in Fig.3 dargestellte Situation, gemäß der bei in der Versenkstellung befindlichem Festdach 2 die beiden vorderen Längenabschnitte 13 und 14 der beiden Dachlängsträger 5 und 6 ohne Beeinträchtigung des Sitzkomforts auf den Fahrzeugrücksitzen, beiderseits der Rücksitzbank 15 des Fahrgastraumes an den Bordwänden 16 und 17 der Fahrzeugkarosserie aufliegen.
Der die beiden seitlichen Dachlängsträger 5 und 6 sowie die beiden an diese anschließenden hinteren Dachpfosten 7 und 8 untereinander verbindende starre Längenabschnitt 4 der Dachschale weist eine wenigstens der Hutablage 18 des Fahrzeuges entsprechende Länge auf und überdeckt bei in die Öffnungslage verfahrenem Festdach 2 den Bereich zwischen vorderem Rand 19 des Kofferraumdeckels 20 und der Rückenlehne 21 der Rücksitzbank 15 des Fahrgastraumes. wobei der verbleibende starre Längenabschnitt 4 der Dachschale bei in der Versenkstellung befindlichem Festdach zugleich auch eine Abdeckung der Hutablage 18 bildet. Da für das Absenken des Festdaches in den Kofferraum 10 lediglich ein verhältnismäßig kleiner Spaltraum zwischen einem die Hutablage 18 tragenden rückwärtigen Teil und dem Kofferraumdeckel 20 erforderlich ist, ist der Kofferraumdeckel 20 in herkömmlicher Weise mittels zweier U-förmiger Scharnierarme 23 an dem Karosseriequerträger 22 angelenkt.
Die Karosseriebordwände 16 und 17 weisen im Bereich der Rücksitze 15 des Fahrzeuges eine der Breite der vorderen Längenabschnitte 13 und 14 der beiden Dachlängsträger 3 und 4 entsprechende Dicke auf und sind mit einer nach oben offene Aufnahmemulde 24 und 25 für die vorderen Längenabschnitte 13 und 14 ausgestattet, wobei in den Zeichnungen im Einzelnen nicht dargestellte, schwenk-oder verschiebbare Abdeckungen vorgesehen sind, welche bei in seiner Schließlage befindlichem Festdach 2 die Aufnahmemulden 24 und 25 nach oben abdecken und zugleich Armlehnen bilden.
Aus der Darstellung gemäß Fig.4 ist ersichtlich, daß bei in der Versenkstellung befindlichem Festdach 2 die Zugänglichkeit des Kofferraumes 10 durch den durch das nach vorne gerichtete Verschieben der Heckscheibe 9 geschaffenen Freiraum zwischen den beiden Dachpfosten 7, 8 aufrecht erhalten ist.

## Patentansprüche

1. Versenkbares Festdach für Cabriolet-Fahrzeuge, insbesondere mehrsitzige Cabriolets, mit einem eine Dachschale (3, 4), zwei seitliche Dachlängsträger (5, 6) und an diese anschließende hintere Dachpfosten (7, 8) sowie eine relativ zur Dachschale (3, 4) verstellbare Heckscheibe (9) aufweisenden Dachkörper, der mit den Dachpfosten (7, 8) voran der Länge nach in einem Unterbringungsraum in einen Kofferraum (10) hineinbewegbar und dabei an innerhalb des Kofferraumes (10) und zur Fahrzeugheckwand (11) hin abfallend angeordneten, Schiebeführungen bildenden Trag- und Führungsschienen (12) abgestützt und geführt ist,
**dadurch gekennzeichnet,**
**daß** die Dachschale in wenigstens zwei Längenabschnitte (3, 4) unterteilt und wenigstens einer (3) der beiden Längenabschnitte (3, 4) der Dachschale in Fahrzeuglängsrichtung verschiebbar an den beiden seitlichen Dachlängsträgern (5, 6) geführt und abgestützt ist.

2. Festdach nach Anspruch 1, **dadurch gekennzeichnet, daß** zusätzlich zu einem (3) der beiden Längenabschnitte (3, 4) der Dachschale auch die Heckscheibe (9) in Fahrzeuglängsrichtung verschiebbar an den beiden seitlichen Dachlängsträgern (5, 6) sowie an den an diese anschließenden hinteren Dachpfosten (7, 8) geführt ist.

3. Festdach nach Anspruch 1 oder 2, **dadurch gekennzeichnet, daß** der vordere Längenabschnitt (3) der Dachschale nach hinten unter einen hinteren Längenabschnitt (4) verschiebbar ist und daß zugleich die Heckscheibe (9) nach vorne unter den hinteren Längenabschnitt (4) der Dachschale verschiebbar ist.

4. Festdach nach einem der Ansprüche 1 bis 3, **dadurch gekennzeichnet, daß** der vordere Längenabschnitt (3) der Dachschale nach Art eines Schiebedaches zwischen einer angehobenen Schließstellung und einer abgesenkten Verschiebestellung hin und her verstellbar an an den beiden Dachlängsträgern (5, 6) angeordneten Trag- und Führungsschienen abgestützt ist.

5. Festdach nach einem der Ansprüche 1 bis 4, **dadurch gekennzeichnet, daß** der vordere Längenabschnitt (3) der Dachschale aus seiner Schließlage heraus an seinem hinteren Ende nach oben in eine Belüftungsstellung ausstellbar ist;

6. Festdach nach einem der Ansprüche 1 bis 5, **dadurch gekennzeichnet, daß** der die beiden seitlichen Dachlängsträger (5, 6) sowie die beiden an diese anschließenden hinteren Dachpfosten (7, 8) untereinander verbindende starre Teil (4) der Dachschale eine wenigstens einer Hutablage (18) des Fahrzeuges (1) entsprechende Länge aufweist.

7. Festdach nach einem der Ansprüche 1 bis 6, **dadurch gekennzeichnet, daß** der hintere starre Längenabschnitt (4) der Dachschale von einer zumindest den verschieblichen vorderen Längenabschnitt (3) aufnehmenden Kassette untergriffen ist.

8. Festdach nach der Anspruch 7, **dadurch gekennzeichnet, daß** die den hinteren starren Längenabschnitt (4) der Dachschale untergreifende Kassette bei in der Versenkstellung befindlichem Dach sowohl die nach vorne und oben verschobene Heckscheibe (9) als auch den vorderen Längenabschnitt (3) der Dachschale aufnimmt.

9. Festdach nach einem der Ansprüche 1 bis 8, **dadurch gekennzeichnet, daß** die Heckscheibe (9) an den beiden seitlichen Dachlängsträgern (5, 6) sowie an den hinteren Dachpfosten (7, 8) geführt und in Fahrzeuglängsrichtung nach vorne unter den hinteren starren Dachabschnitt (4) verschiebbar ist.

10. Festdach nach einem der Ansprüche 1 bis 9, **dadurch gekennzeichnet, daß** der fest mit den Dachlängsträgern (5, 6) verbundene Längenabschnitt (4) der Dachschale einen H-förmigen Dachrahmen definiert.

11. Cabriolet-Fahrzeug mit einem Festdach nach einem der Ansprüche 1 bis 10.

12. Cabriolet-Fahrzeug nach Anspruch 11, **dadurch gekennzeichnet, daß** die den Dachkörper abstützenden, Schiebeführungen bildenden Trag-und Führungsschienen (12) in einer der Dachkontur entsprechenden Wölbung zur Fahrzeugheckwand (11) hin abfallend gekrümmt sind.

13. Cabriolet-Fahrzeug nach Anspruch 11 oder 12, **dadurch gekennzeichnet, daß** die Karosserieseitenwandungen im Bereich der Rücksitze (15) des Cabriolet-Fahrzeugs (1) eine der Breite der Dachlängsträger (5, 6) entsprechende Dicke aufweisen und eine nach oben offene Aufnahme (24, 25) für vordere Längenabschnitte (13, 14) der Dachlängsträger (5, 6) bilden.

14. Cabriolet-Fahrzeug nach einem der Ansprüche 11 bis 13, **dadurch gekennzeichnet, daß** der Kofferraumdeckel (20) mittels zweier U-förmiger Scharnierarme (23) an einem im Bereich der Hutablage (18) angeordneten Querträger (22) der Fahrzeugkarosserie angelenkt ist.

15. Cabriolet-Fahrzeug nach Anspruch 14, **dadurch gekennzeichnet, daß** der die beiden seitlichen Dachlängsträger (5, 6) sowie die beiden an diese anschließenden hinteren Dachpfosten (7, 8) untereinander verbindende starre Teil (4) der Dachschale eine bei in die Öffnungslage verfahrenem Zustand den Bereich zwischen vorderem Rand (19) des Kofferraumdeckels (20) und der Rückenlehne (21) der hinteren Fahrzeugsitze (15) überdeckt.

## Claims

1. Counter-sinkable hard roof for cabriolet vehicles, in particular multiple-seat cabriolets with a roof member which comprises a roof shell (3, 4), two lateral longitudinal roof beams (5, 6) and rear roof pillars (7, 8) adjacent thereto and a rear screen (9) which is adjustable relative to the roof shell (3, 4) and may be moved into a boot space (10) in a stowage space in a lengthwise direction toward the roof pillars (7, 8) and, in the process, is supported and guided on support and guide rails (12) arranged so as to fall toward the rear wall (11) of the vehicle inside the boot space (10) and forming slideways, **characterised in that** the roof shell is divided into at least two length portions (3, 4) and at least one (3) of the two length portions (3, 4) of the roof shell is guided and supported displaceably in the longitudinal direction of the vehicle on the two lateral longitudinal roof beams (5, 6).

2. Hard roof according to claim 1, **characterised in that**, in addition to one (3) of the two length portions (3, 4) of the roof shell, the rear screen (9) is also guided displaceably in the longitudinal direction of the vehicle on the two lateral longitudinal roof beams (5, 6) and on the rear roof pillars (7, 8) adjacent thereto.

3. Hard roof according to claim 1 or 2, **characterised in that** the front length portion (3) of the roof shell is displaceable backward under a rear length portion (4) and **in that** the rear screen (9) is simultaneously displaceable forward under the rear length portion (4) of the roof shell.

4. Hard roof according to any of claims 1 to 3, **characterised in that** the front length portion (3) of the roof shell is supported adjustably in the manner of a sliding roof between a raised closed position and a lowered displacement position on support and guide rails arranged on the two longitudinal roof beams (5, 6).

5. Hard roof according to any of claims 1 to 4, **characterised in that** the front length portion (3) of the roof shell can be adjusted upwardly at its rear end from its closed position into a ventilation position.

6. Hard roof according to any of claims 1 to 5, **characterised in that** the rigid part (4) of the roof shell joining together the two lateral longitudinal roof beams (5, 6) and the two rear roof pillars (7, 8) adjacent thereto has a length corresponding at least to a parcel shelf (18) of the vehicle (1).

7. Hard roof according to any of claims 1 to 6, **characterised in that** a cartridge which receives at least the displaceable front length portion (3) extends below the rear rigid length portion (4) of the roof shell.

8. Hard roof according to claim 7, **characterised in that** the cartridge extending below the rear rigid length portion (4) of the roof shell accommodates both the rear screen (9) which has been displaced forwardly and upwardly and the front length portion (3) of the roof shell when the roof is located in the countersunk position.

9. Hard roof according to any of claims 1 to 8, **characterised in that** the rear screen (9) is guided on the two lateral longitudinal roof beams (5, 6) and on the rear roof pillar (7, 8) and is displaceable forwardly below the rear rigid roof portion (4) in the longitudinal direction of the vehicle.

10. Hard roof according to any of claims 1 to 9, **characterised in that** the length portion (4) of the roof shell rigidly connected to the longitudinal roof beams (5, 6) defines a H-shaped roof frame.

11. Cabriolet vehicle with a hard roof according to any of claims 1 to 10.

12. Cabriolet vehicle according to claim 11, **characterised in that** the support and guide rails (12) supporting the roof member and forming the slideways are bent in a curve corresponding to the roof contour and falling toward the rear wall (11) of the vehicle.

13. Cabriolet vehicle according to claim 11 or 12, **characterised in that** the body side walls have a thickness corresponding to the width of the longitudinal roof beams (5, 6) in the region of the rear seats (15) of the cabriolet vehicle (1) and form a receptacle (24, 25), which is open at the top, for front length portions (13, 14) of the longitudinal roof beams (5, 6).

14. Cabriolet vehicle according to any of claims 11 to 13, **characterised in that** the boot space lid (20) is linked by means of two U-shaped hinge arms (23) to a cross member (22) of the vehicle body arranged in the region of the parcel shelf (18).

15. Cabriolet vehicle according to claim 14, **characterised in that** the rigid part (4) of the roof shell joining together the two lateral longitudinal roof beams (5, 6) and the two rear roof pillars (7, 8) adjacent thereto covers the region between front edge (19) of the boot space lid (20) and the back rest (21) of the rear vehicle seat (15) when driven into the open position.

## Revendications

1. Toit rigide escamotable pour véhicules du type cabriolet, en particulier cabriolet à plusieurs places, avec un corps de toit présentant une coque de toit (3, 4), deux longerons de toit (5, 6) latéraux et des piliers de toit arrière (7, 8) se raccordant à ceux-ci, ainsi qu'une vitre arrière (9) réglable par rapport à la coque de toit (3, 4), corps de toit qui est déplaçable longitudinalement avec les piliers de toit (7, 8), pour pénétrer dans le volume intérieur d'un espace de logement dans un coffre à bagages (10) et est alors soutenu et guidé sur des glissières support et de guidage (12) formant des guidages coulissants, disposées à l'intérieur du coffre à bagages (10) et allant en descendant en direction de la paroi arrière (11) du véhicule,
**caractérisé en ce que**
la coque de toit est subdivisée en au moins deux tronçons de longueur (3, 4) et au moins l'un (3) des deux tronçons de longueur (3, 4) de la coque de toit étant guidé et soutenu de façon déplaçable dans la direction longitudinale du véhicule, sur les deux longerons de toit (5, 6) latéraux.

2. Toit rigide selon la revendication 1, **caractérisé en ce qu'**en plus de l'un (3) des deux tronçons de longueur (3, 4) de la coque de toit, également la vitre arrière (9) est guidée de façon déplaçable dans la direction longitudinale du véhicule, sur les deux longerons de toit (5, 6) latéraux, ainsi que sur les piliers de toit arrière (7, 8) se raccordant à ceux-ci.

3. Toit rigide selon la revendication 1 ou 2, **caractérisé en ce que** le tronçon de longueur avant (3) de la coque de toit est déplaçable vers l'arrière sous un tronçon de longueur arrière (4), et **en ce qu'**en même temps la vitre arrière (9) est déplaçable vers l'avant, sous le tronçon de longueur arrière (4) de la coque de toit.

4. Toit rigide selon l'une des revendications 1 à 3, **caractérisé en ce que** le tronçon de longueur avant (3) de la coque de toit est soutenu sur des glissières support et de guidage disposées sur les deux longerons de toit (5, 6), en étant réglable par manoeuvre dans un sens ou dans l'autre, à la façon d'un toit coulissant, entre une position de fermeture levée et une position coulissée abaissée.

5. Toit rigide selon l'une des revendications 1 à 4, **caractérisé en ce que** le tronçon de longueur avant (3) de la coque de toit est manoeuvrable, de sa position de fermeture à une position d'aération, avec levée de son extrémité arrière.

6. Toit rigide selon l'une des revendications 1 à 5, **caractérisé en ce que** la partie rigide (4) reliant ensemble les deux longerons de toit latéraux (5, 6), ainsi que les deux piliers de toit (7, 8) arrière s'y raccordant, de la coque de toit présente une longueur correspondant au moins à une plage arrière (18) du véhicule (1).

7. Toit rigide selon l'une des revendications 1 à 6, **caractérisé en ce que** le tronçon de longueur (4) rigide arrière de la coque de toit est entouré par le dessous par une cassette logeant au moins le tronçon de longueur avant (3) mobile.

8. Toit rigide selon la revendication 7, **caractérisé en ce que** la cassette entourant par le dessous le tronçon de longueur (4) rigide arrière de la coque de toit, lorsque le toit se trouve à la position escamotée, loge tant la vitre arrière (9) déplacée vers l'avant et vers le haut, qu'également le tronçon de longueur avant (3) de la coque de toit.

9. Toit rigide selon l'une des revendications 1 à 8, **caractérisé en ce que** la vitre arrière (9) est guidée sur les deux longerons de toit latéraux (5, 6), ainsi que sur les piliers de toit arrière (7, 8), et est déplaçable dans la direction longitudinale du véhicule vers l'avant, sous le tronçon de toit (4) rigide arrière.

10. Toit rigide selon l'une des revendications 1 à 9, **caractérisé en ce que** le tronçon de longueur (4), relié rigidement au longeron de toit (5, 6) de la coque de toit, définit un cadre de toit en forme de H.

11. Véhicule du type cabriolet muni d'un toit rigide selon l'une des revendications 1 à 10.

12. Véhicule du type cabriolet selon la revendication 11, **caractérisé en ce que** les glissières de support et de guidage (12) soutenant le corps de toit, formant le guidage coulissant, sont incurvées, en descendant en une courbure correspondant au contour du toit, vers la paroi arrière (11) du véhicule.

13. Véhicule du type cabriolet selon la revendication 11 ou 12, **caractérisé en ce que**, dans la zone de siège arrière (15) du véhicule de type cabriolet (1), les parois latérales de carrosserie présentent une épaisseur correspondant à la largeur des longerons de toit (5, 6) et forment un logement (24, 25) ouvert vers le haut, pour des tronçons de longueur avant (13, 14) des longerons de toit (5, 6).

14. Véhicule du type cabriolet selon l'une des revendications 11 à 13, **caractérisé en ce que** le couvercle de coffre à bagages (20) est articulé, au moyen de deux bras de charnière (23) en forme de U, sur un support transversal (22) disposé dans la zone de la plage arrière (18).

15. Véhicule du type cabriolet selon la revendication 14, **caractérisé en ce que** la partie rigide (4), reliant entre eux les deux longerons de toit latéraux (5, 6), ainsi que les deux piliers de toit arrière (7, 8) s'y raccordant, de la coque de toit, lorsqu'on est passé à l'état en position d'ouverture, couvre la zone située entre le bord avant (19) du couvercle de coffre à bagages (20) et le dossier (21) des sièges arrière de véhicule (15).
